# EUROPEAN PATENT SPECIFICATION

(11) **EP 2 915 612 B1**
(45) Date of publication and mention of the grant of the patent: **26.10.2022**
(21) Application number: 13850465.9
(22) Date of filing: 08.10.2013
(51) Int. Cl.: B23B 51/02

(54) **TWO-EDGE DOUBLE MARGIN DRILL**
BOHRER MIT ZWEI SCHNEIDKANTEN UND DOPPELFÜHRUNGSFASEN
FORET À DEUX ARÊTES ET DOUBLE LISTEL

(30) Priority: 30.10.2012 JP 2012238644
(43) Date of publication of application: 09.09.2015
(73) Proprietor: Sumitomo Electric Hardmetal Corp., Itami-shi, Hyogo 664-0016 (JP)
(72) Inventor: SATO, Yoshiji, Itami-shi Hyogo 664-0016 (JP); KURIZUKA, Kazumasa, Itami-shi Hyogo 664-0016 (JP); JINDAI, Masaaki, Itami-shi Hyogo 664-0016 (JP)
(74) Representative: Grünecker Patent- und Rechtsanwälte PartG mbB
(86) International application number: PCT/JP2013/077287
(87) International publication number: WO 2014/069179

(56) References cited:
- CN-A- 102 389 991
- JP-A- 2000 263 307
- JP-A- 2001 105 220
- JP-A- 2005 305 610
- JP-A- 2011 020 256
- JP-U- H 069 813
- JP-U- H0 524 218

## Description

### Technical Field

The present invention relates to a two-edge drill including a major margin and a minor margin at each of two lands, and, particularly, to a two-edge double margin drill in which the distance from each major margin to its corresponding minor margin in an axial direction is shortened while maximally providing a guide effect by the margins.

### Background Art

The aforementioned two-edge double margin drill is ideally one in which, in order to maximally provide a guide function by the margins, the major margins and the minor margins are disposed at an equal interval (a 90° interval) and the distance from the major margins to the respective minor margins (amount of recession of the minor margins from the respective major margins) is short.

However, in order to reduce thrust force, an end of a drill is generally subjected to web thinning that reduces a chisel edge width. When the web thinning is one that is called X web thinning, it becomes difficult to dispose the minor margins at positions that are reached by a 90° rotation from the respective major margins.

When X web thinning is performed, an end of each minor margin is cut, as a result of which the distance from the major margins to the respective minor margins in the axial direction becomes long. In such a drill, the time at which the minor margins enter drill holes is delayed, as a result of which, until the minor margins enter the drill holes, guiding is performed by a two-point support using the major margins. Therefore, when, for example, such a drill is used for high-feed drilling, guiding at an initial stage of forming holes becomes unstable, thereby making it difficult to increase drilling precision of the holes.

In order to solve this problem, Patent Literature 1 below proposes to dispose an outermost end of an edge line, where an X web thinning surface and a flank face of an end of a drill intersect, behind a minor margin (second margin) in the direction of rotation of the drill. Document JP 2005 305610 A relates to a twist drill which is of a double-margin type having an enlarged thinning section, wherein each margin section stably exerts a guiding function for a cutting edge, and minimizes its abrasion. When the cutting edge 12 is viewed from the tip along an axis O, the second margin section 54 includes an external peripheral edge 44A located at a land area 50 on an intersecting edge line 44 between a front end flank 13 and the thinning section 40, and it is spaced a predetermined distance forward away from a heel portion 51 of the cutting edge 12 in a drill rotating direction T. Then a body clearance 55 located on the rear of the second margin section 54 in the drill rotating direction T is formed so as to progressively recede toward an inner peripheral side of a drill main body 10 at a location closer to the rear in the drill rotating direction T. The flank faces 13 at an end include a flat first flank face 13A and a flat second flank face 13B.

Document JP 2005 305610 A does not disclose the formation of convex arcs in a direction of drill rotation in front view of the drill at a central portion of the end, and that an interval (θ) between the major margin (6) and the minor margin (7) at each land (5) is set from 80° to 100°.

### Citation List

### Patent Literature

PTL 1: Japanese Unexamined Patent Application Publication No. 2000-263307

### Summary of Invention

### Technical Problem

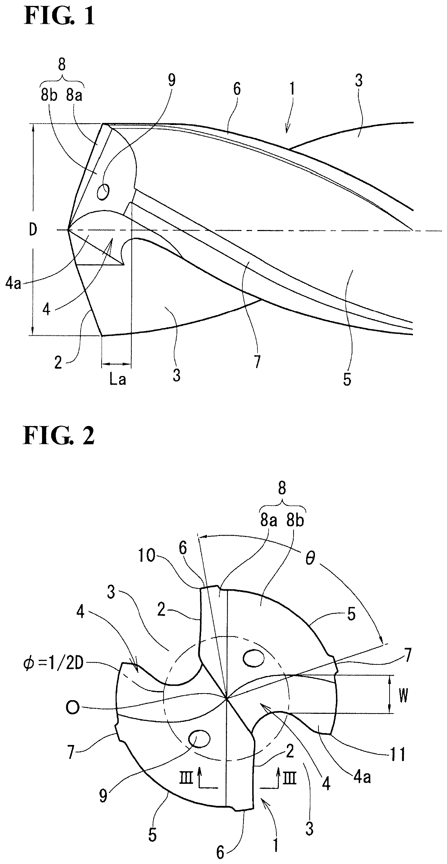

As shown in Fig. 1 in the document, the drill according to PTL1 whose web thinning surfaces have special shapes that do not extend to outer peripheries of the respective lands allows each major margin (first margin) and its corresponding minor margin (second margin) to be disposed substantially 90° apart from each other without causing the position of an end of each minor margin from receding.

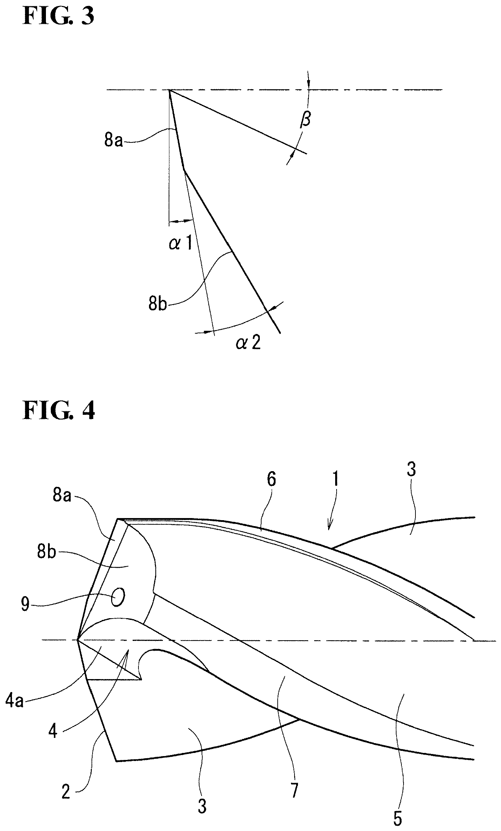

However, as shown in Fig. 3 in the document, a drill whose web thinning surfaces extend to outer peripheries of respective lands without causing the positions of ends of respective minor margins to recede are such that an interval that is close to 90° between the major margins and the respective minor margins has not yet been realized.

A web thinning portion having a special shape that does not extend to the outer periphery of the land such as that shown in Fig. 1 in PTL 1 is such that a pocket that is formed by the web thinning portion is narrow. Therefore, clogging of chips produced by a cutting operation using a cutting edge at a rotation center portion tends to occur, as a result of which it is difficult to expect the chips to be smoothly guided to a helical flute. In addition, a surface of the web thinning portion having such a shape tends to be subjected to machining restrictions.

Further, in the drill discussed in the document, it is supposed that each flank face is a conical surface, as a result of which a further reduction in the distance from each major margin to its corresponding minor margin in the axial direction is not considered.

It is an object of the present invention to provide a two-edge double margin drill that can shorten as much as possible the distance from a major margin to a minor margin in an axial direction while a web thinning surface extends to an outer periphery of a land, and keep the interval between the major margin and the minor margin within an ideal range.

### Solution to Problem

To this end, the present invention provides a two-edge double margin drill according to claim 1 including a major margin and a minor margin at each of two lands, the major margin being provided along a leading edge and the minor margin being disposed near a heel. The two-edge double margin drill has the following structure.

That is, an interval between the major margin and the minor margin at each land is set from 80° to 100°, flank faces at an end both include a flat first flank face and a flat second flank face, web thinning portions (R thinning) including web thinning surfaces that intersect with the respective flat second flank face to form convex arcs in a direction of drill rotation in front view of the drill are formed at a central portion of the end, and an outer end of each web thinning surface in a radial direction extends to an outer periphery of the corresponding land, and intersection points with the respective lands are disposed behind an end of the corresponding minor margin in the direction of drill rotation.

For the drill in which the helix angle of each helical flute is in a general range (on the order of 20° to 30°), it is desirable that the width of each web thinning surface in front view of the drill at the position that is separated by a distance equal to 1/4 of a drill diameter D from a rotation center be on the order of 0.10D to 0.20D.

Further, it is desirable that the clearance angle of each first flank face be on the order of 5 to 12° and that the clearance angle of each second flank face be on the order of 15° to 23°. If the clearance angle of each first flank face is greater than or equal to 5° and the clearance angle of each second flank face is greater than or equal to 15°, it is possible to prevent interference between each of the flank faces and a workpiece even if drilling is performed under a high-feed condition in which the feed rate per rotation exceeds 0.6 mm. If the clearance angle of each first flank face is less than or equal to 12° and the clearance angle of each second flank face is less than or equal to 23°, it is possible to further shorten the distance from each major margin to its corresponding minor margin in the axial direction.

The width of each minor margin may be the same as or wider than the width of each major margin.

### Advantageous Effects of Invention

The drill according to the invention makes it possible to prevent each web thinning surface, provided at the central portion of the end, to extend to an end of its corresponding minor margin by causing each web thinning portion to be an R web thinning portion. Therefore, each minor margin no longer recedes by being cut by a web thinning operation, as a result of which each minor margin can be disposed at an ideal position that is separated by 80° to 100° from its corresponding major margin.

Since each R web thinning surface extends to the outer periphery of its corresponding land, each pocket that is formed by its corresponding web thinning portion does not become narrow, as a result of which it is less likely for chip clogging to occur. In addition, since each web thinning portion opens to the outer periphery of its corresponding land, machining is easily performed.

Further, since the flank faces at the end each include the flat first flank face and the flat second flank face, it is possible to further shorten the distance from each major margin to its corresponding minor margin in the axial direction, so that machining of the flank faces is facilitated compared to when the flank faces are conical flank faces.

### Brief Description of Drawings

[Fig. 1] Figure 1 is a side view of a two-edge double margin drill according to an embodiment of the invention.
[Fig. 2] Figure 2 is a front view of the drill in Fig. 2.
[Fig. 3] Figure 3 is an enlarged sectional view of a position along line III-III in Fig. 2.
[Fig. 4] Figure 4 is a side view of a two-edge double margin drill according to another embodiment of the invention.
[Fig. 5] Figure 5 is a front view of the drill in Fig. 4.
[Fig. 6A] Figure 6A is an explanatory view of a clearance angle of a first flank face and a clearance angle of a second flank face.
[Fig. 6B] Figure 6B is an explanatory view of the distance from an outer edge of a cutting edge to a minor margin in an axial direction and a section where the minor margin does not function.
[Fig. 7] Figure 7 shows results of comparative tests of precisions of the positions of holes due to differences in front clearance angles.

### Description of Embodiments

Two-edge double margin drills according to embodiments of the invention are hereunder described with reference to Figs. 1 to 7 of the attached drawings.

A two-edge double margin drill 1 shown in Figs. 1 and 2 includes two cutting edges 2, 2, which are disposed symmetrically with respect to a center; two helical flutes 3, 3; two web thinning portions 4, 4; a major margin 6 and a minor margin 7 that are provided at an outer periphery of each of lands 5, 5; flank faces 8, each of which is a combination of a first flank face 8a and a second flank face 8b; and oil holes 9.

Each cutting edge 2 is formed by an edge line between a flute face of its corresponding helical flute 3 and the corresponding first flank face 8a. The web thinning portions 4, 4 that cause chisel edges of the respective cutting edges to be narrowed are provided by R web thinning that cause web thinning surfaces 4a that intersect with the respective second flank faces 8b to form convex arcs in a direction of drill rotation in front view of the drill in Fig. 2. Although, in the exemplary drill, a helix angle β (see Fig. 3) of each helical flute 3 is set at 30°, the helix angle β is not particularly limited thereto.

Outer ends of the web thinning surfaces 4a of the respective web thinning portions 4 in a radial direction extend to the outer peripheries of the respective lands 5, and intersection points with the respective lands are disposed behind ends of the respective minor margins 7 in the direction of drill rotation. In the exemplary drill, widths W of the web thinning surfaces 4a in front view of the drill at positions that are separated by a distance equal to 1/4 of a drill diameter D from a rotation center O are set at 0.18D. When a lower limit of the widths W is restricted to 0.10D, the occurrence of pockets formed by the web thinning portions 4 becoming too narrow is suppressed. Therefore, the problem that the flow of chips is prevented when the pockets are too narrow is less likely to occur.

When the upper limit of the widths W is set at 0.20D, it is possible to smoothly guide the chips that are produced to the helical flutes 3.

Each major margin 6 is provided along the outer periphery of the corresponding land 5 along a leading edge 10. Each minor margin 7 is provided near a heel 11 at the outer periphery of the corresponding land 5. In the case of the illustrated drill, an interval θ (see Fig. 2) between the major margins 6 and the respective minor margins 7 in a peripheral direction is substantially 90°, and the margins are disposed at an ideal interval from each other. Even if the interval θ between the major margins 6 and the respective minor margins 7 in the peripheral direction is greater or less than the optimal value of 90° by approximately 10°, a good guide effect can be expected.

Each flank face 8 includes the first flank face 8a and the second flank face 8b. The first flank faces 8a and the second flank faces 8b are both flat faces and provide excellent machinability. In the exemplary drill, a clearance angle α1 of each first flank face 8a shown in Fig. 3 is set at 9°, and a clearance angle α2 of each second flank face 8b is set at 15°. Although the clearance angles are set considering drilling conditions, for the reasons already mentioned, the clearance angle α1 of each first flank face is set in the range of from 5° to 12°, and the clearance angle α2 of each second flank face is set in the range of from 15° to 23°.

In high-feeding drills, it is desirable to provide the oil holes 9 for supplying coolant to cutting sections. However, they are not required.

The drill according to the invention makes it possible to, by providing the web thinning portions 4 by R web thinning that does not cause the web thinning portions 4 to extend to areas where the minor margins 7 are provided, set the interval θ between the major margins and the respective minor margins in the peripheral direction in the range of from 80° to 100°, while preventing an end of each minor margin from being cut.

Therefore, it is possible to satisfy the requirements of keeping the interval θ between the major margin and its corresponding minor margin in the peripheral direction within the ideal range, and of shortening as much as possible a distance La from an outer end of the cutting edge to its corresponding minor margin (from the major margin to its corresponding minor margin) in an axial direction while each web thinning surface extends to the outer periphery of its corresponding land.

By forming each flank face so as to include a flat first flank face and a flat second flank face, it is possible to shorten the distance from each major margin to its corresponding minor margin in the axial direction.

Therefore, a delay in the time at which the minor margins enter drill holes is prevented, and guiding by a four-point support at ideal locations is performed from an early stage is performed, so that drilling precision of holes is increased.

Since the web thinning surfaces extend to the outer peripheries of the respective lands, the pockets at the ends formed by the web thinning portions do not become narrow, chip clogging is less likely to occur, and machining of the web thinning portions is facilitated.

In drills in which the widths of the web thinning surfaces in front view of the drill at positions separated by a distance equal to (1/4)D from the rotation center are set on the order of 0.10D to 0.20D, chips are smoothly guided to the helical flutes by the web thinning surfaces. Thus, such drills excel in chip evacuation performance.

### EXAMPLES

### - EXAMPLE 1 -

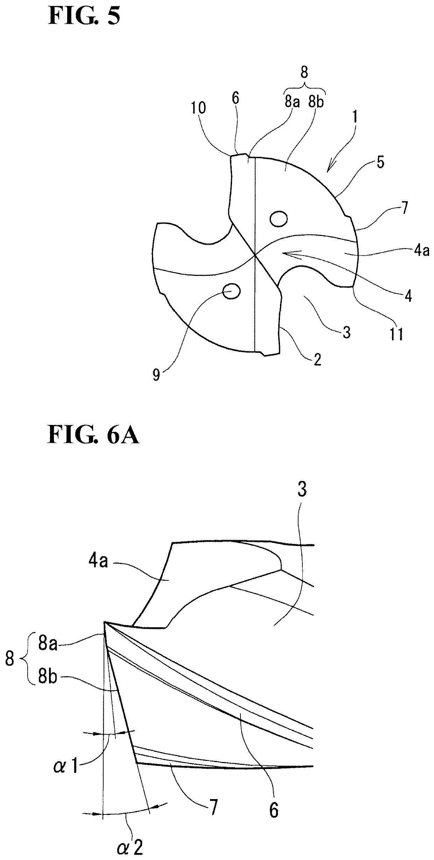

Drills having the shapes shown in Figs. 4 and 5 were test-manufactured. The dimensions of the drills were: diameter D = 13 mm, center thickness = 4.6 mm, helix angle β of each helical flute = 30°, clearance angle α1 of each first flank face = 9°, clearance angle α2 of each second flank face = 15°, and width W of each web thinning surface in end view of the drill at a position separated by a distance equal to (1/4)D from the rotation center = 2.3 mm.

The test-manufactured drills were such that cutting of ends of the minor margins by a web thinning process was prevented as a result of providing the illustrated R web thinning portions, and a distance La from an outer end of each cutting edge to its corresponding minor margin in an axial direction was capable of being shortened to 0.4 mm. In addition, it was possible to set an interval θ between the major margins and the respective minor margins in a peripheral direction at 90°. Therefore, even in a drilling operation (workpiece: cast iron) under a high-feed condition in which a cutting speed V = 120 m/min and a feed f = 0.6 mm/rev, movements at the initial stage of drilling holes were small, and the precision of drill holes was increased.

Since the sizes of pockets formed at the ends by the web thinning portions were large enough and the guiding effect of chips by the web thinning surfaces was good, the chips were smoothly evacuated to the helical flutes, and problems caused by clogging of the chips did not occur.

### - EXAMPLE 2 -

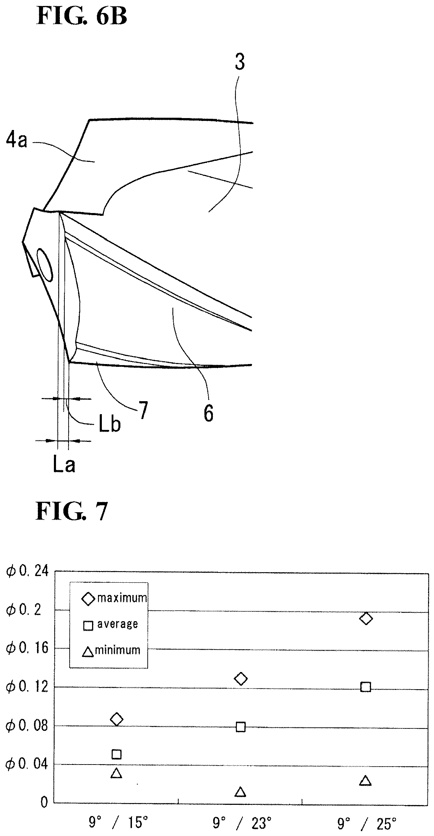

Drills I to III were used and the precisions of the positions of holes resulting from differences between clearance angles of second flank faces were examined. Regarding the drills I to III, a clearance angle α1 of a first flank face and a clearance angle α2 of a second flank face shown in Fig. 6A, a distance La from an outer end of a cutting edge to a minor margin in an axial direction shown in Fig. 6B, and a distance Lb from a position where a major margin starts to function to the minor margin (section where the minor margin does not function) were set in accordance with Table 1.

The test was carried out by a method for drilling holes in a workpiece FC250 using a drill having a drill diameter φ of 13.0 mm.

The cutting conditions were: cutting speed Vc = 120 m/min, feed f = 0.6 mm/rev, and drill hole depth H = 38 mm.

The results of the test are shown in Fig. 7. In Fig. 7, a rhombus (◇) indicates a maximum value of an error (mm) of a hole diameter, a square (□) indicates the average value thereof, and a triangle (Δ) indicates a minimum value thereof.

**[Table 1]**

| | Drill I | Drill II | Drill III |
|---|---|---|---|
| Clearance angle *α*1 | 9 ° | 9 ° | 9 ° |
| Clearance angle *α*2 | 1 5 ° | 2 3 ° | 2 5 ° |
| Distance La | 0. 4 mm | 1. 3 mm | 1. 5 mm |
| Distance Lb | 0. 2 mm | 1. 1 mm | 1. 3 mm |

The test results show that, if the clearance angle α2 of the second flank face is within the range of 15° to 23°, even in high-efficient drilling, interference (contact) of the second flank face with the workpiece does not occur, so that it is possible to drill holes with high precision.

In small-diameter drills whose diameter is, for example, less than or equal to φ4 mm, the absolute value of the feed rate of a front flank face becomes small. Therefore, the clearance angle α2 of a second flank face needs to be on the order of 23°. However, in drills whose diameter is, for example, φ20 mm, it is possible to perform drilling with a feed rate of up to 1.0 mm/rev in the case of a design in which the clearance angle α2 of the second flank face = 15°.

The structures according to the embodiments of the present invention disclosed above are, strictly speaking, exemplifications, and the scope of the present invention is not limited by the descriptions of the structures. The scope of the present invention is indicated by the description of the claims, and all modifications that are within the scope of the claims are included.

### Reference Signs List

1 two-edge double margin drill
2 cutting edge
3 helical flute
4 web thinning portion
4a web thinning surface
5 land
6 major margin
7 minor margin
8 flank face
8a first flank face
8b second flank face
9 oil hole
10 leading edge
11 heel
D drill diameter
O rotation center
θ interval in peripheral direction between major margin and minor margin
W width of web thinning portion in front view of drill at position separated by distance (1/4)D from rotation center β helix angle
α1 clearance angle of first flank face
α2 clearance angle of second flank face
La distance from outer end of cutting edge to minor margin in axial direction
Lb distance from position where major margin starts to function to minor margin (section where minor margin does not function)

## Claims

1. A two-edge double margin drill (1) including a major margin (6) and a minor margin (7) at each of two lands (5):
the major margin (6) being provided along a leading edge (10);
the minor margin (7) being disposed near a heel (11);
said two-edge double margin drill (1) further comprising:
flank faces (8) at an end including a flat first flank face (8a) and a flat second flank face (8b); and
web thinning portions (4) including web thinning surfaces (4a) that intersect with the respective flat second flank face (8b) to form convex arcs in a direction of drill rotation in front view of the drill at a central portion of the end,
wherein an interval (θ) between the major margin (6) and the minor margin (7) at each land (5) is set from 80° to 100°; and
wherein an outer end of each web thinning surface (4a) in a radial direction extends to an outer periphery of the corresponding land (5), and intersection points with the respective lands are disposed behind an end of the corresponding minor margin (7) in the direction of drill rotation.

2. The two-edge double margin drill according to Claim 1, wherein for the two-edge double margin drill (1), in which a helix angle of each helical flute lies in a range of 20° to 30°, a width of each web thinning surface in front view of the two-edge double margin drill (1) at a position separated by a distance equal to 1/4 of a drill diameter D from a rotation center (O) of the two-edge double margin drill (1) is 0.10 to 0.20 times the drill diameter D.

## Patentansprüche

1. Zweischneidiger Doppelrandbohrer (1) mit einem Hauptrand (6) und einem Nebenrand (7) an jedem von zwei Stegen (5):
wobei der Hauptrand (6) entlang einer Vorderkante (10) vorgesehen ist;
der Nebenrand (7) in der Nähe einer Kante (11) angeordnet ist;
wobei der zweischneidige Doppelrandbohrer (1) ferner umfasst:
Flankenflächen (8) an einem Ende mit einer flachen ersten Flankenfläche (8a) und einer flachen zweiten Flankenfläche (8b); und
und Kerndünnungsabschnitte (4), die Kerndünnungsflächen (4a) aufweisen, die sich mit der jeweiligen flachen zweiten Flankenfläche (8b) schneiden, um konvexe Bögen in einer Drehrichtung des Bohrers in Vorderansicht des Bohrers an einem mittleren Abschnitt des Endes zu bilden,
wobei ein Abstand (θ) zwischen dem Hauptrand (6) und dem Nebenrand (7) an jedem Steg (5) von 80° bis 100° eingestellt ist; und
wobei sich ein äußeres Ende jeder Kerndünnungsfläche (4a) in einer radialen Richtung zu einem Außenumfang des entsprechenden Stegs (5) erstreckt und Schnittpunkte mit den jeweiligen Stegen hinter einem Ende des entsprechenden Nebenrandes (7) in der Drehrichtung des Bohrers angeordnet sind.

2. Zweischneidiger Doppelrandbohrer gemäß Anspruch 1, wobei für den zweischneidigen Doppelrandbohrer (1), bei dem ein Schrägungswinkel jeder Spiralnut in einem Bereich von 20° bis 30° liegt, eine Breite jeder Kerndünnungsfläche in der Vorderansicht des zweischneidigen Doppelrandbohrers (1) an einer Position, die durch einen Abstand gleich 1/4 eines Bohrdurchmessers D von einem Drehmittelpunkt (O) des zweischneidigen Doppelrandbohrers (1) getrennt ist, das 0,10- bis 0,20-fache des Durchmessers D des Bohrers beträgt.

## Revendications

1. Foret à deux bords de coupe et double listel (1) comprenant un listel majeur (6) et un listel mineur (7) sur chacune des deux bandes de listel (5),
le listel majeur (6) étant pourvu le long d'un bord d'attaque (10) ;
le listel mineur (7) étant disposé près d'un talon (11) ;
ledit foret à deux bords de coupe et double listel (1) comprenant en outre :
des faces de dépouille (8) à une extrémité comprenant une première face de dépouille plane (8a) et une deuxième face de dépouille plane (8b) ; et
des portions d'amincissement de l'âme (4) comprenant des surfaces d'amincissement de l'âme (4a) qui intersectent la deuxième face de dépouille plane respective (8b) pour former des arcs convexes en direction de rotation du foret en vue de face du foret à une portion centrale de l'extrémité,
dans lequel l'intervalle (8) entre le listel majeur (6) et le listel mineur (7) sur chaque bande de listel (5) est compris entre 80° et 100° ; et
dans lequel une extrémité externe de chaque surface d'amincissement de l'âme (4a) en direction radiale s'étend vers la périphérie externe de la bande de listel correspondante (5), et des points d'intersection avec les bandes de listel respectives sont disposés derrière une extrémité du listel mineur correspondant (7) en direction de rotation du foret.

2. Foret à deux bords de coupe et double listel selon la revendication 1, dans lequel, pour le foret à deux bords de coupe et double listel (1) où l'angle hélicoïdal de chaque cannelure hélicoïdale est compris dans une plage de 20° à 30°, la largeur de chaque surface d'amincissement de l'âme en vue de face du foret à deux bords de coupe et double listel (1) à une position séparée par une distance égale à 1/4 du diamètre de foret D d'un centre de rotation (O) du foret à deux bords de coupe et double listel (1) est de 0,10 à 0,20 fois le diamètre du foret D.
